(19) Europäisches Patentamt / European Patent Office / Office européen des brevets

(11) **EP 3 117 555 B1**

(12) **FASCICULE DE BREVET EUROPEEN**

(45) Date de publication et mention
de la délivrance du brevet:
**22.01.2020 Bulletin 2020/04**

(21) Numéro de dépôt: **15703784.7**

(22) Date de dépôt: **12.02.2015**

(51) Int Cl.:
***H04L 9/00*** *(2006.01)*

(86) Numéro de dépôt international:
**PCT/EP2015/052908**

(87) Numéro de publication internationale:
**WO 2015/121324 (20.08.2015 Gazette 2015/33)**

(54) **PROCÉDÉ DE CONTREMESURE POUR UN COMPOSANT ÉLECTRONIQUE METTANT EN OEUVRE UN ALGORITHME DE CRYPTOGRAPHIE SUR UNE COURBE ELLIPTIQUE**

GEGENMASSNAHMENVERFAHREN FÜR EINE ELEKTRONISCHE KOMPONENTE ZUR AUSFÜHRUNG EINES ALGORITHMUS ZUR KRYPTOGRAFIE MIT ELLIPTISCHEN KURVEN

COUNTERMEASURE METHOD FOR AN ELECTRONIC COMPONENT IMPLEMENTING AN ELLIPTIC CURVE CRYPTOGRAPHY ALGORITHM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.02.2014 FR 1451096**

(43) Date de publication de la demande:
**18.01.2017 Bulletin 2017/03**

(73) Titulaire: **Secure-IC SAS**
**35510 Cesson-Sévigné (FR)**

(72) Inventeurs:
• **MURDICA, Cédric**
  **35700 Rennes (FR)**
• **GUILLEY, Sylvain**
  **75013 Paris (FR)**

(74) Mandataire: **Hnich-Gasri, Naïma**
**Marks & Clerk France**
**Immeuble Visium**
**22, avenue Aristide Briand**
**94117 Arcueil Cedex (FR)**

(56) Documents cités:
**US-A1- 2007 177 721    US-A1- 2012 008 780**

• **KARAKOYUNLU D ET AL: "Efficient and side-channel-aware implementations of elliptic curve cryptosystems over prime fields", IET INFORMATION SECURITY,, vol. 4, no. 1, 18 mars 2010 (2010-03-18), pages 30-43, XP006034531, ISSN: 1751-8717, DOI: 10.1049/IET-IFS:20090038**
• **MAGENHEIMER D J ET AL: "INTEGER MULTIPLICATION AND DIVISION ON THE HP PRECISION ARCHITECTURE", IEEE TRANSACTIONS ON COMPUTERS, IEEE SERVICE CENTER, LOS ALAMITOS, CA, US, vol. 37, no. 8, 1 août 1988 (1988-08-01), pages 980-990, XP000111594, ISSN: 0018-9340, DOI: 10.1109/12.2248**
• **SMART N P ET AL: "Randomised representations", IET INFORMATION SECURITY,, vol. 2, no. 2, 9 juin 2008 (2008-06-09), pages 19-27, XP006031111, ISSN: 1751-8717, DOI: 10.1049/IET-IFS:20070017**
• **MUSTAPHA HEDABOU ET AL: "Some Ways to Secure Elliptic Curve Cryptosystems", ADVANCES IN APPLIED CLIFFORD ALGEBRAS, vol. 18, no. 3-4, 1 septembre 2008 (2008-09-01), pages 677-688, XP055161615, ISSN: 0188-7009, DOI: 10.1007/s00006-008-0093-8**

**Description**

L'invention concerne un procédé de contremesure pour un composant électronique mettant en œuvre un algorithme de cryptographie à clé publique sur une courbe elliptique, un composant électronique et un système mettant en œuvre le procédé. Elle s'applique au domaine de la cryptographie sur courbes elliptiques. La cryptographie sur courbes elliptiques permet notamment de générer des signatures, de chiffrer des messages numériques ou d'établir des clés de chiffrement.

L'activité des circuits électroniques est observable pendant leur fonctionnement au travers des grandeurs physiques telles que la consommation de puissance, le temps de calcul ou le rayonnement électromagnétique.

Ces quantités physiques dépendent à la fois des architectures de calcul et des données manipulées à l'intérieur du circuit. Des informations sur les données traitées sont donc indirectement disponibles à l'extérieur du circuit par l'observation des dites quantités appelées canaux cachés ou canaux auxiliaires.

La dissipation de ces quantités physiques peut remettre en cause la sécurité de systèmes traitant des données secrètes protégées notamment par des méthodes de cryptographie. Ainsi, si des données secrètes sont protégées en utilisant un algorithme de cryptographie à clé de chiffrement secrète, la robustesse de la protection réside dans la capacité à garder ladite clé réellement secrète. La dissipation des quantités physiques peut permettre à un tiers d'obtenir ladite clé en mettant en œuvre des attaques adaptées et, par conséquent, d'accéder aux données secrètes.

Une attaque par observation de quantités physiques dissipées par ledit circuit est qualifiée habituellement d'attaque par canaux cachés. Dans la suite de la description, un tiers utilisant des méthodes d'attaque par observation pour accéder à des données ne lui étant pas destinées est appelé attaquant, les quantités physiques dissipées, quant à elles, sont appelées fuites ou canaux cachés.

Il existe aujourd'hui des attaques par observation puissantes permettant d'accéder aux données traitées par des circuits protégés. Ces méthodes permettent de contourner la sécurité conférée au niveau mathématique par la cryptographie.

Les applications cryptographiques à bases de courbes elliptiques utilisent habituellement comme opération principale une multiplication scalaire sur courbe elliptique ECSM (Elliptic Curve Scalar Multiplication). Cette opération détermine un scalaire $[k]P = P + P + \cdots + P$ à partir d'un point $P$ et d'un entier $k$. Le point $P$ est d'ordinaire une donnée publique, tandis que l'entier $k$ est un secret.

L'opération de multiplication scalaire sur courbe elliptique ECSM peut être mise en œuvre à l'aide de plusieurs méthodes appartenant à l'état de la technique, parmi lesquelles la technique dite de multiplication scalaire à fenêtre de gauche à droite (voir la figure 1), l'échelle de Montgomery (voir la figure 2) et la technique dite de Multiplication Scalaire à fenêtre glissante de droite à gauche en $w$NAF (voir la figure 3). Ces méthodes opèrent habituellement bit à bit. Les opérations de base sur courbe elliptique telles que l'addition ou le doublement ainsi que les points utilisés (pré-calculés ou dynamiques) dépendent des bits courants.

Certaines attaques par canaux cachés sont très puissantes car une seule observation d'une multiplication ECSM suffit à déterminer tous les bits du scalaire.

Il existe une attaque pouvant être utilisée à l'encontre des méthodes de cryptographie à base de courbes elliptiques qui consiste à déterminer quelles valeurs sont manipulées pendant une opération précise en comparant des sous traces de la consommation de *courant.* On qualifie une telle attaque d'horizontale. Un exemple est l'attaque Big Mac, mais il en existe d'autres, comme l'attaque SVA (Same-Values Analysis) décrite dans l'article de C. Murdica, S. Guilley, J.-L. Danger, P. Hoogvorst et D. Naccache intitulé Same Values Power Analysis Using Special Points on Elliptic Curves, Workshop on Cryptographic Hardware and Embedded Systems, 2001. Le fait de connaître quelles sont les valeurs manipulées révèle de l'information sur le scalaire. Cette attaque est mise en œuvre en comparant la consommation de courant à différentes itérations de l'ECSM. Etant donné que la consommation de courant est corrélée aux valeurs manipulées, l'attaque consiste à détecter si des même valeurs sont manipulées à des moments différents du calcul de multiplication scalaire ECSM.

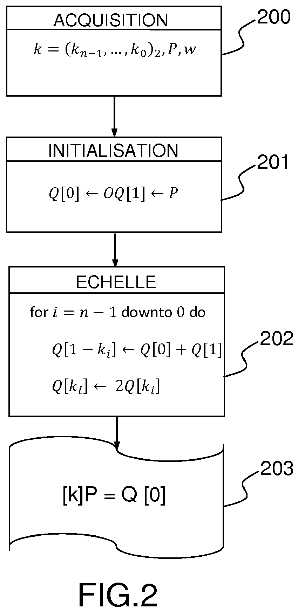

Dans le cas de l'échelle de Montgomery (voir la figure 2), Q[0] est l'opérande 1 lors de l'addition (les opérandes 1 et 2 d'une addition ne sont pas utilisés de la même façon). Q[0] sera l'entrée du doublement uniquement si $k_i$ = 0.

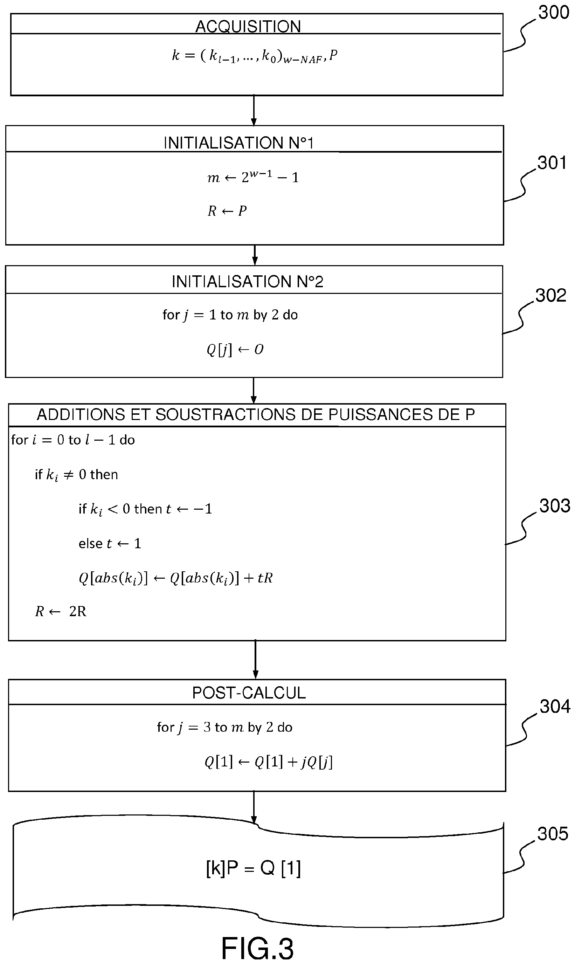

Dans le cas de la multiplication scalaire à fenêtre glissante de droite à gauche en $w$NAF (voir la figure 3), il s'agit de détecter si le point $R$ est utilisé deux fois lors d'une même itération.

L'analyse du résultat de l'addition d'une itération et de l'entrée de l'addition des itérations suivantes peut également dévoiler de l'information.

Ce type d'attaque est très puissant car la connaissance du point de base n'est pas nécessaire et une seule trace permet de récupérer le scalaire en entier. Ainsi, les contremesures de randomisation du point de départ ou de randomisation du scalaire sont inefficaces. En outre, ce type d'attaque peut être adapté à d'autres opérations ECSM. Ce type d'attaque est appelé « Big-Mac » et est présenté dans l'article de C. D. Walter intitulé Sliding Windows Succumbs to Big MacAttack, Workshop on Constructive Side-Channel Analysis and Secure Design, 2012.

Un des buts de l'invention est de remédier à des insuffisances/inconvénients de l'état de la technique et/ou d'y apporter des améliorations.

A cet effet, l'invention a pour objets un procédé de contremesure pour un composant électronique mettant en œuvre un algorithme de cryptographie à clé publique sur une courbe elliptique $E$ définie sur un corps $\mathbb{K}$ et comprenant une opération itérative de multiplication scalaire permettant d'obtenir un point $[k]P$ à partir d'un point $P$ de la courbe $E$ et d'un entier $k$ devant rester secret, la consommation électrique du composant électronique dépendant de la valeur prise par au moins un point dit critique utilisé lors de ladite opération pour déterminer itérativement le point $[k]P$, le procédé comprenant :

- une étape de fourniture d'au moins une puissance d'un élément $c$ de $\mathbb{K}$ prédéfini constant non nul et différent de un ;
- une étape d'initialisation des coordonnées du au moins un point critique à une valeur prédéfinie ;
- une étape mettant en œuvre l'opération de multiplication scalaire, les coordonnées associées à au moins un point critique étant modifiées à chaque itération en multipliant au moins une des coordonnées de ce point par la au moins une puissance de l'élément $c$ obtenu à l'étape de fourniture (500).

Selon un mode de réalisation, l'élément $c$ est choisi inférieur ou égal à la moitié de la cardinalité du groupe de base de la courbe.

Selon un mode de réalisation, l'élément c est choisi d'ordre $\delta$ strictement supérieur à trois fois le nombre d'itérations de la multiplication scalaire de manière à éviter que l'élément un n'intervienne lors des multiplications successives de puissances de $c$.

Selon un mode de réalisation, les multiplications par les puissances de $c$ suivantes $c$, $c$^2, $c$^3, $c$^4 et $c$^6 sont déterminées par l'utilisation de chaines d'additions, $c$ étant choisi de manière à minimiser la longueur desdites chaînes d'additions.

Selon un mode de réalisation, les coordonnées associées à au moins un point critique sont modifiées par équivalence de projection.

Selon un mode de réalisation, les coordonnées associées à au moins un point critique sont modifiées par la mise en œuvre d'un isomorphisme $\varphi$ entre la courbe $E$ une deuxième courbe elliptique $E'$.

Selon un mode de réalisation, l'opération de multiplication scalaire est mise en œuvre par une multiplication scalaire à fenêtre de gauche à droite, la fenêtre étant de taille $w$.

Selon un mode de réalisation, l'opération de multiplication scalaire est mise en œuvre par une échelle de Montgomery.

Selon un mode de réalisation, l'opération de multiplication scalaire est mise en œuvre par une multiplication scalaire à fenêtre glissante de droite à gauche en $w$NAF.

Selon un mode de réalisation, l'opération de multiplication scalaire est mise en œuvre avec les étapes suivantes :

- initialisation à zéro des coordonnées d'un point Q utilisé comme variable de travail et correspondant à une multiplication scalaire partielle ;
- pré-calcul de $2^w$ multiples $R[j]$ de $P$ avec $j = 1 ... 2^w$ ;
- doublement de $Q$ et addition de $R[v]$ à $Q$ avec fenêtre glissante , la contremesure étant mise en œuvre en modifiant à chaque itération $i$ les coordonnées $(X_{R[v]}, Y_{R[v]}, Z_{R[v]})$ du point $R[v]$ avec $v = (k_i, ..., k_{i-w+1})_2$ en utilisant l'expression suivante:

$$\left( X_{R[v]}, Y_{R[v]}, Z_{R[v]} \right) = \left( c^2 X_{R[v]}, c^3 Y_{R[v]}, c Z_{R[v]} \right).$$

Selon un mode de réalisation, l'opération de multiplication scalaire est mise en œuvre avec les étapes suivantes :

- initialisation à zéro des coordonnées d'un point Q utilisé comme variable de travail et correspondant à une multiplication scalaire partielle ;
- pré-calcul de $2^w$ multiples $R[j]$ de $P$ avec $j = 1 ... 2^w$ ;
- doublement de $Q$ et addition de $R[v]$ à $Q$ avec fenêtre glissante (603), la contremesure étant mise en œuvre en modifiant les coordonnées $(X_Q, Y_Q)$ et $(X_{R[j]}, Y_{R[j]})$ des points $R[j]$ et $Q$ à chaque itération de la manière suivante :

    i. $(X_Q, Y_Q) = (c^2 X_Q, c^3 Y_Q)$
    ii. pour $j$ allant de 1 à $2^w$, $(X_{R[j]}, Y_{R[j]}) = (u^2 X_{R[j]}, u^3 Y_{R[j]})$

L'invention a aussi pour objet un circuit électronique de cryptographie à clé publique sur une courbe elliptique $E$ définie sur un corps $\mathbb{K}$, mettant en œuvre une opération de multiplication scalaire permettant d'obtenir un point $[k]P$ à partir d'un point $P$ de la courbe $E$ et d'un entier $k$ devant rester secret, la consommation électrique dudit composant dépendant de la valeur prise par au moins un point dit critique utilisé lors de ladite opération pour déterminer itérativement le point $[k]P$, le circuit comprenant au moins un module adapté de manière à :

- fournir un élément $c$ de $\mathbb{K}$ prédéfini constant non nul et différent de un ;
- initialiser des coordonnées du au moins un point critique à une valeur prédéfinie ;
- mettre en œuvre l'opération de multiplication scalaire, les coordonnées associées à au moins un point critique étant modifiées à chaque itération en multipliant au moins une des coordonnées de ce point par une puissance de l'élément $c$.

Selon un mode de réalisation, le circuit électronique comprend une mémoire interne dans laquelle est stocké l'élément $c$.

Selon un mode de réalisation, des procédures de calcul correspondant aux chaînes d'addition requises pour la mise à jour des coordonnées du au moins un point critique sont pré-calculées et stockées dans la mémoire interne au composant.

L'invention a aussi pour objet un système de cryptographie à clé publique sur une courbe elliptique $E$ définie sur un corps $\mathbb{K}$ comprenant un circuit électronique tel que décrit précédemment et une mémoire externe audit circuit dans laquelle est stockée l'élément $c$.

Selon un mode de réalisation, des procédures de calcul correspondant aux chaînes d'addition requises pour la mise à jour des coordonnées du au moins un point critique sont pré-calculées et stockées dans la mémoire externe.

L'invention a aussi pour objet un programme d'ordinateur comportant des instructions pour l'exécution du procédé décrit précédemment, lorsque le programme est exécuté par un module de traitement de données.

D'autres caractéristiques et avantages de l'invention apparaîtront à l'aide de la description qui suit donnée à titre illustratif et non limitatif, faite en regard des dessins annexés parmi lesquels :

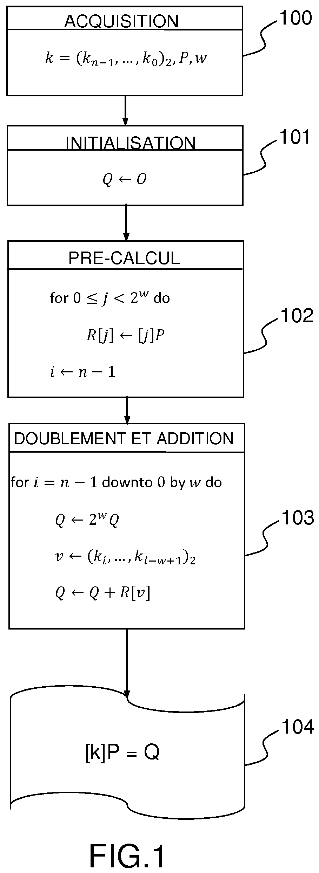

- la figure 1 donne un exemple de mise en œuvre de multiplication scalaire sur courbe elliptique ECSM à l'aide de la technique de multiplication scalaire à fenêtre ;
- la figure 2 donne un exemple de mise en œuvre de multiplication scalaire sur courbe elliptique ECSM à l'aide d'une échelle de Montgomery ;
- la figure 3 donne un exemple de mise en œuvre de multiplication scalaire sur courbe elliptique ECSM à l'aide d'une fenêtre glissante de droite à gauche en wNAF ;

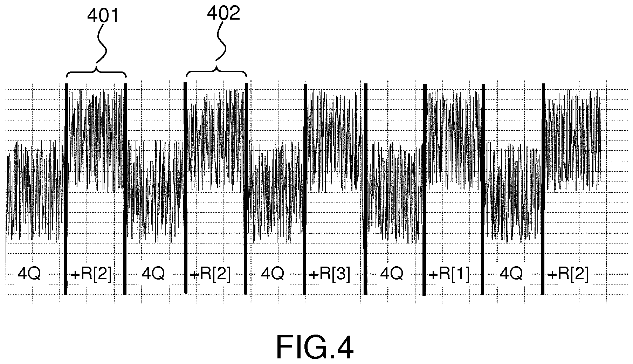

- la figure 4 donne un exemple de trace générée par la technique de multiplication scalaire à fenêtre de longueur deux ;

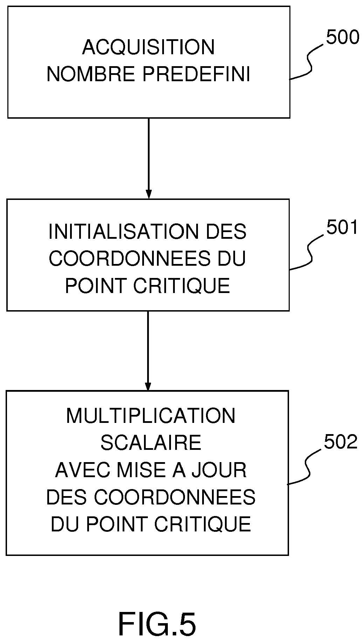

- la figure 5 est un diagramme illustrant de manière simplifiée le procédé selon l'invention ;

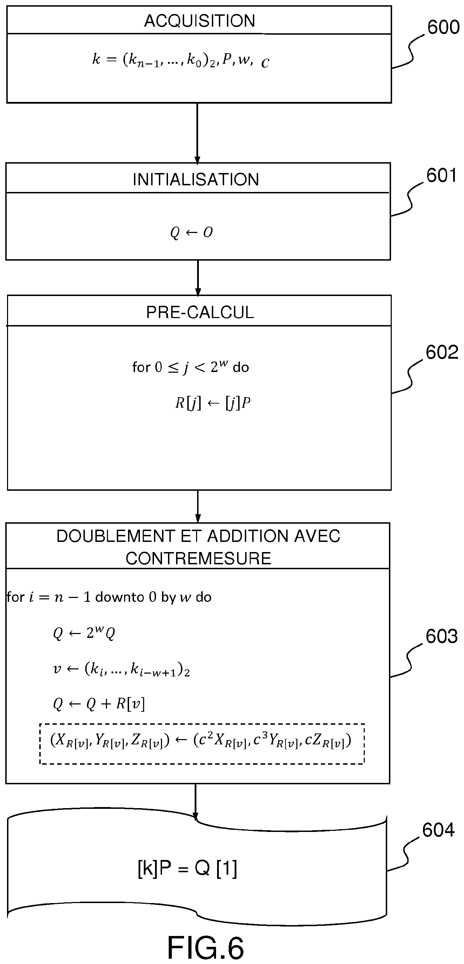

- figure 6 donne un exemple de mise en œuvre d'un procédé de contremesure pour un composant électronique mettant en œuvre un algorithme de cryptographie à clé publique sur une courbe elliptique E avec mise à jour des coordonnées des points par équivalence en propriétés projectives ;

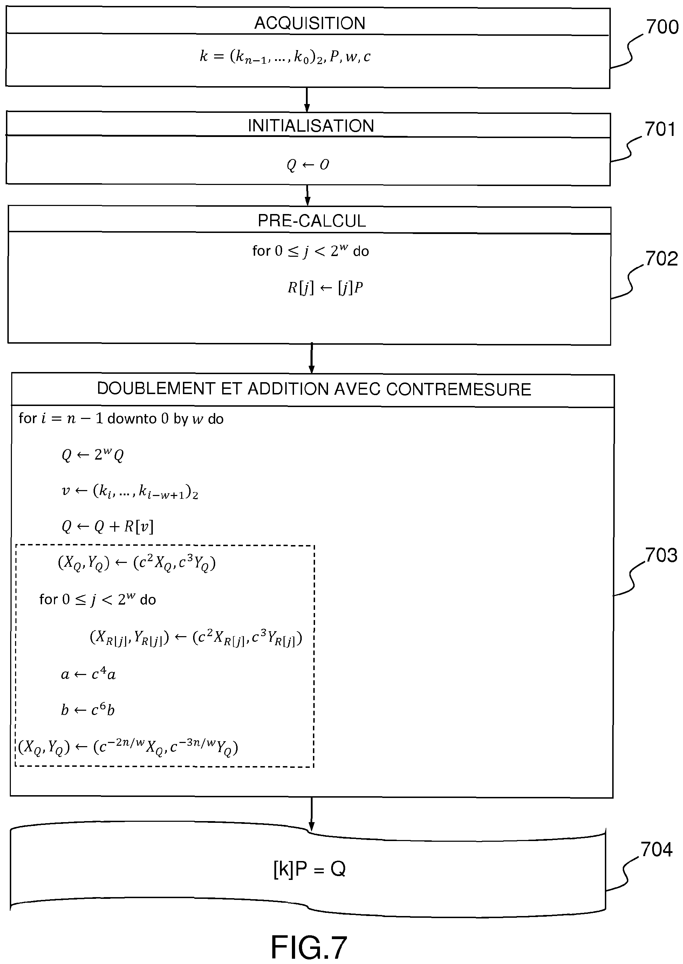

- la figure 7 donne un exemple de mise en œuvre d'un procédé de contremesure pour un composant électronique mettant en œuvre un algorithme de cryptographie à clé publique sur une courbe elliptique E avec mise à jour des coordonnées des points par isomorphisme ;

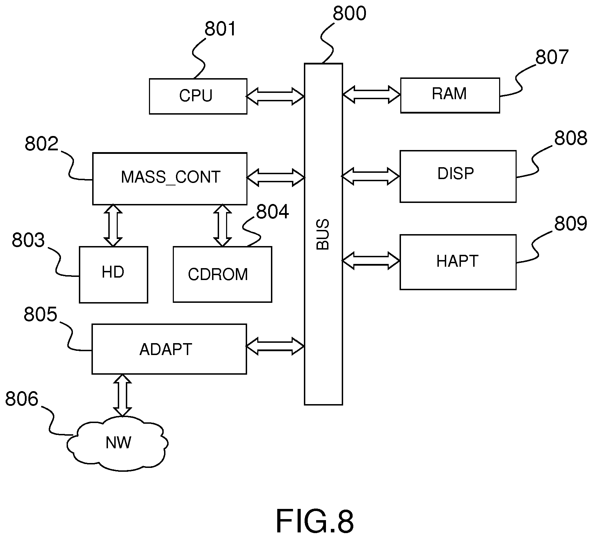

- la figure 8 présente un système électronique pouvant mettre en œuvre le procédé de contremesure selon l'invention.

La figure 1 donne un exemple de mise en œuvre de multiplication scalaire par courbe elliptique ECSM à l'aide de la technique de multiplication scalaire à fenêtre.

Les données utilisées en entrée 100 sont :

- un entier $k$ correspondant à la clé privée $(k_{n-1},...,k_0)_2$ exprimée en base deux ;
- un point $P$ de la courbe correspondant habituellement à une donnée publique ;
- un entier w correspondant à la taille de la fenêtre.

Il est à noter que $w$ est choisi avec $w|n$. Si ce n'est pas le cas, le scalaire est complété avec des zéros à gauche.

Dans une première étape 101, un point $Q$ utilisé comme variable de travail et correspondant à une multiplication scalaire partielle est initialisée à zéro.

Dans une deuxième étape 102, $2^w$ multiples $R[j]$ de $P$ sont pré-calculés.

Une troisième étape 103 est ensuite appliquée de manière à réaliser un traitement de doublement et d'addition à fenêtre glissante de longueur w désigné habituellement par l'expression anglaise « sliding window double-and-add ».

La valeur prise à la fin de l'étape 103 par la variable $Q$ est ensuite retournée comme résultat et correspond au scalaire $[k]P$.

La figure 2 donne un exemple de mise en œuvre de multiplication scalaire sur courbe elliptique ECSM à l'aide d'une échelle de Montgomery.

Les données utilisées en entrée 200 sont :

- un entier $k$ correspondant à la clé privée $(k_{n-1},...,k_0)_2$ exprimée en base deux ;
- un point $P$ de la courbe correspondant habituellement à une donnée publique.

Dans une première étape 201, deux variables de travail $Q[0]$ et $Q[1]$ correspondant à deux multiplications scalaires partielles sont respectivement initialisées à zéro et $P$.

Une deuxième étape 202 réalise le calcul par échelle et la valeur prise par la variable $Q[0]$ à la fin de l'étape est ensuite proposée 203 comme résultat et correspond à la quantité *[k]P.*

La figure 3 donne un exemple de mise en œuvre de multiplication scalaire sur courbe elliptique ECSM à l'aide d'une fenêtre glissante de droite à gauche en wNAF.

La représentation en NAF (Non Adjacent Form) de taille w d'un entier positif $k$ correspond à l'expression suivante :

$$k = \sum_{i=0}^{l-1} k_i 2^i$$

dans laquelle :

- chaque coefficient $k_i$ différent de 0 est impair ;
- $-2^{w-1} < k_i < 2^{w-1}$ ;
- $k_{l-1} \neq 0$ ;
- au plus un parmi $w$ coefficients consécutifs est différent de zéro.

Cette représentation est utile dans certains cas d'exponentiation car elle est la particularité de contenir peu d'éléments différents de zéro.

Les données utilisées en entrée 300 de cette méthode sont :

- la représentation NAF de la taille de la fenêtre $k = (k_{l-1},...,k_0)_{w-NAF}$ ;
- un point $P$ de la courbe correspondant habituellement à une donnée publique.

Une première étape 301 initialise une variable $m$ et une variable $R$ servant de registre d'accumulation des puissances de $P$.

Une deuxième étape 302 initialise $m$ variables $Q[]$ de multiplication scalaire partielle à zéro.

Une étape 303 réalise une mise à jour des variables $Q[]$ par additions et soustractions de puissances de $P$. La fonction *abs*() est une fonction renvoyant la valeur absolue de son paramètre d'entrée. Dans cette étape, le doublement du registre d'accumulation $R$ est exécuté à chaque itération de la boucle d'incrémentation sur la variable $i$.

Une étape 304 met en œuvre une phase de post-calcul déterminant itérativement $Q[1]$ par addition d'une multiplication partielle $j$. $Q[j]$.

La valeur prise à la fin de l'étape 303 par la variable $Q[1]$ est ensuite retournée 304 comme résultat et correspond au point *[k]P.*

La figure 4 donne un exemple de trace générée par la technique de multiplication scalaire à fenêtre de longueur deux.

Pour $w = 2$, $R[1]$, $R[2]$ et $R[3]$ valent :

$$R[1] = [(0\ 1)]_2 P$$

$$R[2] = [(1\ 0)]_2 P$$

$$R[3] = [(1\ 1)]_2 P$$

Dans cet exemple simple donné à titre d'illustration, le scalaire $k$ est le suivant :

$$k = (10\ 10\ 11\ 01\ 10)_2$$

*[k]P* sera calculé de la façon suivante :

$$[k]P = 4(4(4(4R[2] + R[2]) + R[3]) + R[1]) + R[2]$$

Le scalaire *k* peut être facilement déduit si un attaquant est capable de déterminer quel point parmi *R*[1],*R*[2] ou *R*[3] est additionné à *Q* à chaque itération. Pour cela, la consommation de courant aux différentes itérations de la multiplication ECSM est estimée. L'attaque Big-Mac exploite le fait que la consommation de courant est corrélée aux valeurs du point additionné.

Dans l'exemple de la figure 4, si les relevés de consommations électriques 401, 402 correspondant à deux itérations successives de l'étape 103 sont corrélés, cela signifie que :

$$(k_{n-1}, k_{n-2}) = (k_{n-3}, k_{n-4})$$

Si les relevés de consommation électrique 401, 402 ne sont pas corrélés, cela signifie au contraire que :

$$(k_{n-1}, k_{n-2}) \neq (k_{n-3}, k_{n-4})$$

L'attaque Big-Mac a pour objectif de détecter si des mêmes valeurs sont manipulés à des moments différents du calcul de multiplication scalaire afin de remonter au secret *k.*

Pour contrecarrer ce type d'attaque, le procédé de cryptographie selon l'invention comprend un mécanisme de contremesure s'appuyant sur une modification des coordonnées d'au moins un point critique après son utilisation lors de la multiplication scalaire sur courbe elliptique. Pour cela, des propriétés des courbes elliptiques sont exploitées. Dans cette description, un point est dit critique lorsque l'observation des variations de la consommation électrique du composant électronique résultant de l'utilisation de ce point lors de la mise en œuvre de la multiplication scalaire peut révéler tout ou partie du scalaire k.

La figure 5 est un diagramme illustrant de manière simplifiée le procédé selon l'invention.

L'invention concerne un procédé de contremesure dans un circuit électronique mettant en œuvre un algorithme de cryptographie à clé publique sur une courbe elliptique. Il applique pour cela une opération de multiplication scalaire sur la courbe elliptique *E* de manière à obtenir un point *[k]P* à partir d'un point *P* de *E* et d'un entier *k* tout en appliquant un mécanisme de contremesure. Cette opération s'appuie sur l'utilisation d'au moins un point critique.

Le procédé selon l'invention comprend une étape 500 de fourniture d'au moins une puissance d'un élément prédéfini constant non nul c. Cet élément c appartient au corps $\mathbb{K}$ et est différent de un. A titre d'exemple, cette étape peut permettre l'obtention de l'élément c lui-même (qui est en fait équivalent à la puissance de un de cet élément, soit c^1). Dans un mode de réalisation alternatif, cette étape peut permettre d'obtenir un ensemble de puissances de *c* composé par exemple de c^1, c^2 et c^3.

Ainsi, plusieurs puissances de *c* peuvent être mémorisées dans un circuit de cryptographie mettant en œuvre l'invention, ce qui a pour avantage déterminant de rendre difficile pour un tiers la détection de la valeur de *c* utilisée.

Dans un mode de réalisation, l'élément *c* est choisi d'ordre $\delta$ strictement supérieur à trois fois le nombre d'itérations de la multiplication scalaire de manière à éviter que l'élément un n'intervienne lors des multiplications successives de puissances de *c*. Pour rappel, l'ordre d'un élément *e* de $\mathbb{K}$ est le plus petit entier $\delta$ non nul tel que $e^\delta = 1$.

L'homme du métier comprendra sans effort que d'autres données peuvent également être acquises lors de cette étape parmi lesquelles les coordonnées du point *P,* le scalaire *k* ou la largeur *w* de la fenêtre de travail le cas échéant.

Une étape 501 du procédé initialise ensuite le ou les points critiques utilisés pour la mise en œuvre de la multiplication scalaire. Pour cela, et en fonction de la technique utilisée pour la mise en œuvre de la multiplication scalaire, les coordonnées du ou des points critiques peuvent être initialisés à zéro, avec les coordonnées du point *P* ou à toutes autres valeurs adaptées.

Une étape 502 met en œuvre l'opération de multiplication scalaire sur la courbe elliptique *E* de manière itérative ainsi que la contremesure lui étant associée. La contremesure consiste à modifier les coordonnées d'au moins un point critique à chaque itération. Les coordonnées sont modifiées en multipliant au moins l'une d'elles par une puissance de l'élément *c* acquis à l'étape 500. La valeur dudit élément est par exemple mémorisée dans le circuit électronique ou dans une mémoire accessible dudit circuit.

L'élément *c* est prédéfini au sens où il est choisi et mémorisé avant application du procédé.

La technique utilisée pour la mise en œuvre de la multiplication scalaire peut être choisie parmi les algorithmes suivants : multiplication scalaire à fenêtre de gauche à droite, échelle de Montgomery, multiplication scalaire à fenêtre glissante de droite à gauche en wNAF.

Le procédé selon l'invention comprend deux modes de réalisations préférés.

Un premier mode de réalisation préféré s'appuie sur la mise à jour du représentant d'au moins un point critique de manière à maintenir une équivalence en propriété projective du point avant et après mise à jour de ses coordonnées.

Un deuxième mode de réalisation préféré s'appuie sur la mise à jour par isomorphisme des représentants des points utilisés, c'est-à-dire de leurs coordonnées.

L'élément c est prédéfini au sens où il est choisi et mémorisé avant application du procédé. A titre d'exemple, un circuit électronique mettant en œuvre le procédé selon l'invention se verra attribuer une valeur de c choisie au moment de sa production et cette valeur sera mémorisée dans le circuit. Le concepteur d'un tel circuit peut cependant attribuer des valeurs de c différentes pour les différents circuits qu'il produit. Avantageusement, l'attribution d'une pluralité de valeurs c permet d'ajuster le compromis entre sécurité et complexité d'implémentation. Il est à noter que c doit être différent de un pour que les coordonnées soient effectivement modifiées.

La mise à jour des coordonnées du ou des points critiques peut s'effectuer à différents moments :

- en début d'itération ;
- en fin d'itération ;
- après une opération sur courbe elliptique telle que le doublement ou l'addition ;
- ou au sein d'une opération sur courbe elliptique.

Du fait que la mise à jour du ou des représentants des points critiques est faite après chaque utilisation dudit point permet de protéger le circuit contre les attaques horizontales.

L'efficacité de la multiplication ECSM incluant ce mécanisme de contremesure dépend notamment du moment choisi pour mettre à jour le ou les coordonnées des points. Ce moment peut être choisi de manière à éviter de compromettre la sécurité. A titre d'exemple, si la contremesure d'atomicité telle que présentée dans l'article de Chevallier-Mames, B., Ciet, M., et Joye, M. intitulé Low-Cost Solutions for Preventing Simple Side-Channel Analysis: Side-Channel Atomicity, IEEE Transactions on Computers, pages 760-768, 2004, est appliquée avec la multiplication scalaire à fenêtre glissante de droite à gauche en *w*NAF, la mise à jour peut être avantageusement appliquée après chaque bloc atomique.

Il est à noter qu'un procédé de randomisation des coordonnées du point de départ par équivalence des coordonnées est décrit dans la publication de brevet européen EP1166494 B1. Le terme randomisation désigne habituellement une technique qui permet d'introduire un élément aléatoire dans une méthode de traitement de données. Dans cette publication, un élément du corps est tiré aléatoirement, ce qui permet de randomiser le point de départ au début de la multiplication scalaire ECSM.

Un autre procédé de randomisation est divulgué dans la publication de brevet européen EP1381936 B1 et s'appuie notamment sur un tirage aléatoire de la courbe de départ par isomorphisme. Dans ce cas, un élément du corps est tiré aléatoirement de manière à randomiser la courbe et les points au début de la multiplication scalaire ECSM.

Ces deux méthodes permettent de contrecarrer les attaques de type DPA (Differential Power Analysis) et CPA (Chosen-Plaintext Attack). Cependant, l'attaque Big-Mac et d'autres attaques dites horizontales peuvent être envisagées même si ces méthodes sont mises en œuvre. Pour rappel, une attaque est dite horizontale lorsqu'elle est réalisée sur une seule trace d'un signal représentatif de la consommation électrique du circuit de cryptographie. Une attaque est dite verticale lorsqu'elle est réalisée sur une pluralité de traces de signaux représentatifs de la consommation électrique du circuit de cryptographie. Dans le cadre de l'invention, les coordonnées d'au moins un point critique sont modifiées à chaque itération de la multiplication scalaire, ce qui rend la plupart des attaques horizontales inopérantes.

A la différence de ces techniques, le procédé selon l'invention utilise une constante prédéfinie pour la mise à jour des coordonnées, ce qui apporte plusieurs avantages déterminants.

Ainsi, le procédé selon l'invention permet avantageusement une mise en œuvre de complexité réduite par rapport à l'état de la technique précédemment cité. En effet, la génération de nombres aléatoires en tant que telle est complexe. Cela requiert habituellement d'utiliser un générateur TRNG (True Random Number Generator) ou PRNG (PseudoRandom Number Generator) extérieur au circuit électronique mettant en œuvre le procédé de cryptographie à base de courbes elliptiques. En outre, ces générateurs sont vulnérables à des attaques de type blocage du générateur comme décrit dans l'article de T. Markettos et S. W. Moore intitulé The Frequency Injection Attack on Ring-Oscillator-Based True Random Number Generators, CHES 2009, pages 317-331.

Un autre avantage est que la manière dont est implémentée la multiplication des coordonnées du ou des points critiques par l'élément prédéfini constant *c* peut être optimisée en utilisant par exemple des chaînes d'additions, ce qui n'est pas possible dans le cas d'un tirage aléatoire.

En outre, lorsque l'élément utilisé pour la modification des coordonnées est tiré aléatoirement, celui-ci peut potentiellement être grand. En guise d'illustration, il y a une chance sur deux pour que son bit de poids fort soit égal à un. Cela aura alors pour effet d'imposer une multiplication longue et couteuse en termes de ressources calculatoire.

La figure 6 donne un exemple de mise en œuvre d'un procédé de contremesure pour un composant électronique mettant en œuvre un algorithme de cryptographie à clé publique sur une courbe elliptique E avec mise à jour des coordonnées des points par équivalence en propriétés projectives.

Les points sur courbes elliptiques sont habituellement représentés en coordonnées Jacobiennes et appelées dans cette description coordonnées projectives. Pour un point *P,* les notations suivantes sont utilisées :

$$P = (X, Y, Z)$$

Dans ce mode de réalisation, l'équivalence en propriétés projectives pour une courbe elliptique est utilisée. L'équivalence en propriétés projectives signifie que si $\mathbb{K}$ est le corps de base, la représentation en coordonnées projectives (*X,Y,Z*) d'un point *P* est équivalente aux représentations définies par ($c^2X, c^3Y, cZ$) avec

$$c \in \mathbb{K}^*$$

($\mathbb{K}^*$ étant égal à l'ensemble $\mathbb{K}$ auquel est retiré la valeur zéro). En d'autres termes, un même point *P* peut être représenté à l'aide de plusieurs jeux de coordonnées, un jeu de coordonnées pouvant être aussi appelé représentant de point.

L'équivalence en propriétés projectives signifie que n'importe quelle opération réalisée dans le corps $\mathbb{K}$ avec un premier représentant donne le même résultat que si elle avait été appliquée avec un second représentant équivalent en propriétés projectives.

Dans ce mode de réalisation de l'invention, un élément prédéfini c du corps $\mathbb{K}$ est utilisé pour mettre à jour le représentant d'au moins un point utilisé pour la mise en œuvre de la multiplication ECSM . Cette mise à jour est réalisée en modifiant le jeu de coordonnées associé à ce point de manière à respecter l'équivalence en propriétés projectives.

Dans un mode de réalisation, *c* est choisi petit par rapport à la cardinalité du groupe de base sur lequel est construite la courbe. Plus précisément, le nombre de bits codant *c* est choisi inférieur ou égal à la moitié de la cardinalité du groupe de base de la courbe. A titre d'exemple, si les éléments du groupe sont codés sur 256 bits, la cardinalité est de $2^{256}$ et *c* peut être choisi entre 2 à $2^{128}$. Cela permet d'éviter l'utilisation de valeurs trop importantes et ainsi de réduire la complexité de calcul apportée par le changement de coordonnées. La valeur de c peut être avantageusement choisie égale à trois.

Les figures 6 et 7 sont des diagrammes donnant deux exemples de mise en œuvre de l'invention avec un calcul ECSM par multiplication scalaire à fenêtre de gauche à droite. L'homme du métier peut envisager sans effort la mise en œuvre de l'invention pour d'autres calculs ECSM, comme par exemple l'échelle de Montgomery ou la technique de multiplication scalaire à fenêtre glissante de droite à gauche en wNAF.

L'exemple de la figure 6 s'appuie sur un calcul ECSM par multiplication scalaire à fenêtre. Ainsi, comme ce qui a été déjà exposé à l'aide de la figure 1, le procédé comprend dans ce mode de réalisation des données d'entrée 600 et met en œuvre les étapes 601 et 602 correspondant respectivement aux données d'entrée 100 et aux étapes 101 et 102.

Une troisième étape 603 est ensuite appliquée de manière à réaliser un traitement de doublement et d'addition à fenêtre glissante de longueur w de la même manière que pour l'étape 103 mais avec en plus une mise à jour à la fin de chaque itération du représentant ($X_{R[v]}, Y_{R[v]}, Z_{R[v]}$) du point *R*[*v*] ayant été utilisé dans cette itération en respectant l'équivalence en propriétés projectives. Il est à noter qu'une itération correspond au traitement effectué dans une fenêtre de traitement.

Cette mise à jour s'effectue de la manière suivante :

$$(X_{R[v]}, Y_{R[v]}, Z_{R[v]}) \leftarrow (c^2 X_{R[v]}, c^3 Y_{R[v]}, c Z_{R[v]})$$

La valeur prise à la fin de l'étape 603 par la variable *Q*[1] est ensuite fournie 604 comme résultat et correspond au point [*k*]*P.*

La figure 7 donne un exemple de mise en œuvre d'un procédé de contremesure pour un composant électronique mettant en œuvre un algorithme de cryptographie à clé publique sur une courbe elliptique E avec mise à jour des coordonnées des points par isomorphisme.

Une courbe elliptique est définie par son équation de Weierstrass réduite *E* donnée par l'expression suivante :

$$E: y^2 = x^3 + ax + b$$

Soit une deuxième courbe elliptique définie par son équation de Weierstrass réduite *E'* donnée par l'expression suivante :

$$E': y^2 = x^3 + a'x + b'$$

Il est démontré que E est isomorphe à E' s'il existe

$$c \in \mathbb{K}$$

tel que :

$$a' = ac^4$$

$$b' = bc^6$$

Dans ce cas, l'isomorphisme $\varphi$ entre *E* et *E'* est défini par l'expression suivante :

$$\varphi\big((X, Y, Z)\big) = (c^2 X, c^3 Y, Z)$$

Comme pour le mode de réalisation précédent basé la modification de coordonnées par équivalence en propriétés projectives, un élément c appartenant au corps $\mathbb{K}$ est préalablement choisi et mémorisé dans le circuit électronique mettant en œuvre le procédé.

Après l'utilisation du représentant d'un point critique (*X, Y, Z*) pour une opération nécessaire à la mise en œuvre de l'ECSM, $\varphi$ est appliqué et tous les représentants de points sont mis à jour.

Les paramètres *a*, *b* sont également mis à jour s'ils sont utilisés pour les opérations sur courbes elliptiques tels que le doublement ou l'addition de points.

L'exemple de la figure 7 s'appuie sur un calcul ECSM par multiplication scalaire à fenêtre. Ainsi, comme ce qui a été déjà exposé à l'aide de la figure 1, le procédé comprend dans ce mode de réalisation des données d'entrée 700 et met en œuvre les étapes 701 et 702 correspondant respectivement aux données d'entrée 100 ainsi qu'aux étapes 101 et 102.

Une troisième étape 703 est ensuite appliquée de manière à réaliser un traitement de doublement et d'addition à fenêtre glissante de longueur w de la même manière que pour l'étape 103 mais avec en plus une mise à jour à la fin de chaque itération du représentant du point critique *Q*, et ce en utilisant l'expression suivante :

$$(X_Q, Y_Q) \leftarrow (c^2 X_Q, c^3 Y_Q)$$

En outre, l'ensemble des $2^w$ représentants des points critiques *R[j]* sont mis à jours en utilisant l'expression suivante :

$$(X_{R[j]}, Y_{R[j]}) \leftarrow (c^2 X_{R[j]}, c^3 Y_{R[j]})$$

Enfin, les paramètres sont mis à jour après qu'ils aient été utilisés en utilisant les expressions suivantes :

$$a \leftarrow c^4 a$$

$$b \leftarrow c^6 b$$

Un isomorphisme inverse est appliqué 704 de manière à retranscrire les coordonnées du point $Q$ sur la courbe elliptique de départ.

La valeur prise à la fin de l'étape 704 par la variable $Q$ est ensuite fournie 705 comme résultat et correspond au scalaire *[k]P.*

Pour chacune des deux alternatives décrites permettant de changer les coordonnées, l'utilisation d'un élément $c$ de $\mathbb{K}$ est nécessaire. La mise à jour des coordonnées d'au moins un point critique par le calcul de $c^2 X, c^3 Y, cZ$ ou de $c^2 X, c^3 Y$ peut être effectuée en utilisant des chaînes d'addition optimales pour éviter le calcul de multiplications dans le corps. Dans les deux cas, le choix d'une petite valeur de $c$ est particulièrement approprié. De plus, il est préférable de choisir un élément tel que les multiplications par $c, c^2, c^3, c^4, c^6$ ou $c^2, c^3, c^4, c^6$ puissent être effectuées par des chaînes d'additions très courtes. Plus précisément, $c$ est choisi inférieur ou égal à la moitié de la cardinalité du groupe de base de la courbe. De cette façon, la mise à jour des coordonnées ne nécessite que quelques additions dans le corps, ce qui est bien moins coûteux que de mettre en œuvre des multiplications. Par exemple, en choisissant $c = 3$, une multiplication par c peut s'effectuer en deux additions dans le corps de base, une multiplication par $c^2 = 9$ peut s'effectuer en quatre additions, et une multiplication par $c^3 = 27$ peut s'effectuer en six additions. La taille de la chaîne d'additions pour de petits nombres peut se trouver sur : http://oeis.org/A003313. Le choix de $c$ permet un grand nombre de d'optimisations possibles, dont les chaines d'additions. Du fait que la valeur de $c$ est prédéfinie et fixe, il est par exemple possible de déterminer à l'avance les procédures de calcul correspondant aux chaînes d'addition requises pour la mise à jour des coordonnées des points critiques peut être préparées à l'avance. Ainsi, ces chaînes de calculs peuvent être avantageusement intégrées dans le composant électronique mettant en œuvre les opérations de cryptographie à base de courbes elliptiques.

Selon un aspect de l'invention, les multiplications par les puissances de $c$ suivantes $c$, $c$^2 et $c$^3 sont déterminées par l'utilisation de chaines d'additions, $c$ étant dans ce cas choisi de manière à minimiser la longueur desdites chaînes. $c$^2 et $c$^3 représentent respectivement les puissances de deux et de trois de $c$.

La figure 8 présente un système électronique pouvant mettre en œuvre le procédé de contremesure selon l'invention. Ce système comprend une unité centrale de traitement (CPU) 801 reliée à un bus de communication interne 800. Une mémoire à accès aléatoire (RAM) 807 est également connectée au BUS.

Le système comprend en outre un contrôleur de périphérique de stockage de masse 802 dont la fonction est de gérer les accès à une mémoire de masse, tels qu'un disque dur 803.

La mémoire de masse mémorise des instructions de programmes informatiques et des données permettant la mise en œuvre du procédé d'attribution de données temporaires d'authentification.

La mémoire de masse peut être composée de toutes les formes de mémoire non-volatile, comme par exemple des EPROM, des EEPROM, des mémoires flash, des disques magnétiques tels que disques durs internes et des disques amovibles, des disques magnéto-optiques, et des disques CD-ROM 804.

Le système comporte également un adaptateur de réseau 805 gérant l'accès à un réseau de télécommunication 806.

De manière optionnelle, le dispositif peut également comporter un équipement haptique 809 tel qu'un dispositif de commande de curseur, un clavier ou tout autre équipement similaire. Un équipement de commande de curseur peut ainsi être utilisé dans le dispositif pour permettre à l'utilisateur de positionner un curseur à un emplacement donné sur un écran 808. En outre, le dispositif de contrôle du curseur permet à l'utilisateur de sélectionner diverses commandes et de générer des signaux de contrôle. Le dispositif de commande de curseur peut être une souris, l'un des boutons de ladite souris étant utilisé pour déclencher la génération des signaux d'entrée.

## Revendications

1. Procédé de contremesure pour un composant électronique mettant en œuvre un algorithme de cryptographie à clé publique sur une courbe elliptique $E$ définie sur un corps $\mathbb{K}$, le procédé comprenant une opération itérative de multiplication scalaire pour obtenir un point *[k]P* à partir d'un point $P$ de la courbe $E$ et d'un entier $k$ devant rester secret, la consommation électrique du composant électronique dépendant de la valeur prise par au moins un point dit critique utilisé lors de ladite opération pour déterminer itérativement le point *[k]P,* le procédé comprenant :

   - une étape de fourniture (500) d'au moins une puissance d'un élément $c$ de $\mathbb{K}$ prédéfini constant non nul et différent de un ;
   - une étape d'initialisation (501) des coordonnées du au moins un point critique à une valeur prédéfinie ;

- une étape mettant en œuvre l'opération de multiplication scalaire (502), les coordonnées associées à au moins un point critique étant modifiées à chaque itération, en multipliant au moins une des coordonnées de ce point par la au moins une puissance de l'élément c obtenu à l'étape de fourniture (500),

l'élément c étant choisi d'ordre $\delta$ strictement supérieur à trois fois le nombre d'itérations de la multiplication scalaire.

2. Procédé selon la revendication 1, dans lequel l'élément c est choisi inférieur ou égal à la moitié de la cardinalité du groupe de base de la courbe.

3. Procédé selon l'une des revendications précédentes, dans lequel les multiplications par les puissances de c suivantes c, c^2, c^3, c^4 et c^6 sont déterminées par l'utilisation de chaines d'additions, c étant choisi de manière à minimiser la longueur desdites chaînes d'additions.

4. Procédé selon l'une des revendications précédentes, dans lequel les coordonnées associées à au moins un point critique sont modifiées par la mise en œuvre d'un isomorphisme $\varphi$ entre la courbe E une deuxième courbe elliptique E'.

5. Procédé selon l'une des revendications 1 ou 2, dans lequel l'opération de multiplication scalaire est mise en œuvre par une multiplication scalaire à fenêtre de gauche à droite, la fenêtre étant de taille w.

6. Procédé selon l'une des revendications 1 ou 2, dans lequel l'opération de multiplication scalaire est mise en œuvre par une échelle de Montgomery.

7. Procédé selon la revendication 1 ou 2, dans lequel l'opération de multiplication scalaire est mise en œuvre par une multiplication scalaire à fenêtre glissante de droite à gauche en wNAF.

8. Procédé selon la revendication 1 ou 2, dans lequel l'opération de multiplication scalaire est mise en œuvre avec les étapes suivantes :

   - initialisation à zéro (601) des coordonnées d'un point Q utilisé comme variable de travail et correspondant à une multiplication scalaire partielle ;
   - pré-calcul (602) de $2^w$ multiples R[j] de P avec j = 1 ... $2^w$ , R représentant ledit point critique;
   - doublement de Q et addition de R[v] à Q avec fenêtre glissante (603), la contremesure étant mise en œuvre en modifiant à chaque itération i les coordonnées $(X_{R[v]}, Y_{R[v]}, Z_{R[v]})$ du point R[v] avec $v = (k_i,...,k_{i-w+1})_2$ en utilisant l'expression suivante : $(X_{R[v]}, Y_{R[v]}, Z_{R[v]}) = (c^2 X_{R[v]}, c^3 Y_{R[v]}, c Z_{R[v]})$.

9. Procédé selon la revendication 3 dans lequel l'opération de multiplication scalaire est mise en œuvre avec les étapes suivantes :

   - initialisation à zéro (601) des coordonnées d'un point Q utilisé comme variable de travail et correspondant à une multiplication scalaire partielle ;
   - pré-calcul (602) de $2^w$ multiples R[j] de P avec j = 1 ... $2^w$, R représentant ledit point critique;
   - doublement de Q et addition de R[v] à Q avec fenêtre glissante (603), la contremesure étant mise en œuvre en modifiant les coordonnées $(X_Q, Y_Q)$ et $(X_{R[j]}, Y_{R[j]})$ des points R[j] et Q à chaque itération de la manière suivante :

      i. $(X_Q, Y_Q) = (c^2 X_Q, c^3 Y_Q)$
      ii. pour j allant de 1 à $2^w$, $(X_{R[j]}, Y_{R[j]}) = (u^2 X_{R[j]}, u^3 Y_{R[j]})$

10. Circuit électronique de cryptographie à clé publique sur une courbe elliptique E définie sur un corps $\mathbb{K}$ , mettant en œuvre une opération de multiplication scalaire permettant d'obtenir un point [k]P à partir d'un point P de la courbe E et d'un entier k devant rester secret, la consommation électrique dudit composant dépendant de la valeur prise par au moins un point dit critique utilisé lors de ladite opération pour déterminer itérativement le point [k]P, le circuit comprenant au moins un module adapté de manière à :

   - fournir un élément c de $\mathbb{K}$ prédéfini constant non nul et différent de un ;
   - initialiser des coordonnées du au moins un point critique à une valeur prédéfinie ;
   - mettre en œuvre l'opération de multiplication scalaire, les coordonnées associées à au moins un point critique étant modifiées à chaque itération par équivalence de projection, en multipliant au moins une des coordonnées de ce point par une puissance de l'élément c,

l'élément *c* étant choisi d'ordre $\delta$ strictement supérieur à trois fois le nombre d'itérations de la multiplication scalaire

11. Circuit électronique selon la revendication 10, comprenant une mémoire interne dans laquelle est stocké l'élément *c*.

12. Circuit électronique selon la revendication 11, dans lequel des procédures de calcul correspondant aux chaînes d'addition requises pour la mise à jour des coordonnées du au moins un point critique sont pré-calculées et stockées dans la mémoire interne au composant.

13. Système de cryptographie à clé publique sur une courbe elliptique *E* définie sur un corps $\mathbb{K}$ comprenant un circuit électronique selon l'une des revendications 10 à 12 et une mémoire externe audit circuit dans laquelle est stockée l'élément *c*.

14. Système électronique selon la revendication 13, dans lequel des procédures de calcul correspondant aux chaînes d'addition requises pour la mise à jour des coordonnées du au moins un point critique sont pré-calculées et stockées dans la mémoire externe.

15. Programme d'ordinateur comportant des instructions pour l'exécution du procédé selon l'une des revendications 1 à 9, lorsque le programme est exécuté par un module de traitement de données.

**Patentansprüche**

1. Gegenmaßnahmenverfahren für eine elektronische Komponente, die einen Kryptografiealgorithmus mit öffentlichem Schlüssel auf einer elliptischen Kurve *E* durchführt, definiert auf einem Körper $\mathbb{K}$ , wobei das Verfahren eine iterative skalare Multiplikationsoperation zum Erhalten eines Punkts *[k]P* auf der Basis eines Punkts *P* der Kurve *E* und einer ganzen Zahl *k* beinhaltet, die geheim bleiben muss, wobei der Stromverbrauch der elektronischen Komponente von dem Wert abhängig ist, der von mindestens einem bei der Operation zum iterativen Bestimmen des Punkts *[k]P* benutzten kritisch genannten Punkt angenommen wird, wobei das Verfahren Folgendes beinhaltet:

   - einen Schritt (500) des Lieferns von mindestens einer Leistung eines vordefinierten konstanten Elements *c* von $\mathbb{K}$ von ungleich null und nicht eins;
   - einen Schritt (501) des Initialisierens der Koordinaten von dem mindestens einen kritischen Punkt mit einem vordefinierten Wert;
   - einen Schritt des Durchführens der skalaren Multiplikationsoperation (502), wobei die mit mindestens einem kritischen Punkt assoziierten Koordinaten bei jeder Iteration durch Multiplizieren von mindestens einer der Koordinaten dieses Punkts mit der mindestens einen im Lieferungsschritt (500) erhaltenen Leistung des Elements *c* modifiziert werden,

   wobei das Element c in der Größenordnung $\delta$ strikt mehr als dreimal größer als die Anzahl von Iterationen der skalaren Multiplikation gewählt wird.

2. Verfahren nach Anspruch 1, bei dem das Element c kleiner als oder gleich die Hälfte der Kardinalität der Basisgruppe der Kurve gewählt wird.

3. Verfahren nach einem der vorherigen Ansprüche, bei dem die Multiplikationen durch die Leistungen von *c* gemäß *c*, *c*^2, *c*^3, *c*^4 und *c*^6 durch Nutzen von Additionsketten bestimmt werden, wobei *c* so gewählt wird, dass die Länge der Additionsketten minimiert wird.

4. Verfahren nach einem der vorherigen Anspruche, bei dem die mit mindestens einem kritischen Punkt assoziierten Koordinaten durch die Durchführung eines Isomorphismus $\varphi$ zwischen der Kurve *E* und einer zweiten elliptischen Kurve *E'* modifiziert werden.

5. Verfahren nach einem der Ansprüche 1 oder 2, bei dem die skalare Multiplikationsoperation durch eine skalare Multiplikation mit einem Fenster von links nach rechts durchgeführt wird, wobei das Fenster die Größe w hat.

6. Verfahren nach einem der Ansprüche 1 oder 2, bei dem die skalare Multiplikationsoperation nach einer Montgomery-Skala durchgeführt wird.

7. Verfahren nach Anspruch 1 oder 2, bei dem die skalare Multiplikationsoperation durch eine skalare Multiplikation mit einem Gleitfenster von rechts nach links in $w$NAF durchgeführt wird.

8. Verfahren nach Anspruch 1 oder 2, bei dem die skalare Multiplikationsoperation mit den folgenden Schritten durchgeführt wird:

   - Initialisieren (601) der Koordinaten eines Punkts $Q$ auf null, benutzt als Arbeitsvariable und entsprechend einer partialen skalaren Multiplikation;
   - Vorberechnen (602) von $2^w$ Vielfachen $R[j]$ von $P$, wobei $j = 1 \ldots 2^w$, wobei $R$ den kritischen Punkt repräsentiert;
   - Verdoppeln von $Q$ und Addieren von $R[v]$ zu $Q$ mit Gleitfenster (603), wobei die Gegenmaßnahme durch Modifizieren, bei jeder Iteration $i$, der Koordinaten $(X_{R[v]}, Y_{R[v]}, Z_{R[v]})$ des Punkts $R[v]$ durchgeführt wird, wobei $v = (k_i, \ldots, k_{i-w+1})_2$, unter Nutzung des folgenden Ausdrucks: $(X_{R[v]}, Y_{R[v]}, Z_{R[v]}) = (c^2 X_{R[v]}, c^3 Y_{R[v]}, c Z_{R[v]})$.

9. Verfahren nach Anspruch 3, bei dem die skalare Multiplikationsoperation mit den folgenden Schritten durchgeführt wird:

   - Initialisieren (601) der Koordinaten eines Punkts $Q$ auf null, benutzt als Arbeitsvariable und entsprechend einer partialen skalaren Multiplikation;
   - Vorberechnen (602) von $2^w$ Vielfachen $R[j]$ von $P$, wobei $j = 1 \ldots 2^w$ ist, wobei $R$ den kritischen Punkt repräsentiert;
   - Verdoppeln von $Q$ und Addieren von $R[v]$ zu $Q$ mit Gleitfenster (603), wobei die Gegenmaßnahme durch Modifizieren der Koordinaten $(X_Q, Y_Q)$ und $(X_{R[j]}, Y_{R[j]})$ der Punkte $R[j]$ und Q bei jeder Iteration auf die folgende Weise durchgeführt wird:

     i. $(X_Q, Y_Q) = (c^2 X_Q, c^3 Y_Q)$
     ii. wobei j im Bereich von 1 bis $2^w$ liegt, $(X_{R[j]}, Y_{R[j]}) = (u^2 X_{R[j]}, u^3 Y_{R[j]})$.

10. Elektronische Kryptografieschaltung mit öffentlichem Schlüssel auf einer elliptischen Kurve $E$, definiert auf einem Körper $\mathbb{K}$, unter Durchführung einer skalaren Multiplikationsoperation, mit dem ein Punkt $[k]P$ auf der Basis eines Punkts $P$ der Kurve $E$ und einer ganzen Zahl k erhalten werden kann, die geheim bleiben muss, wobei der Stromverbrauch der Komponente von dem Wert abhängig ist, der von mindestens einem bei der Operation zum iterativen Bestimmen des Punkts $[k]P$ benutzten kritisch genannten Punkt angenommen wird, wobei die Schaltung mindestens ein Modul umfasst, ausgelegt zum:

    - Liefern eines konstanten vordefinierten Elements c von $\mathbb{K}$ von ungleich null und nicht eins;
    - Initialisieren der Koordinaten von mindestens einem kritischen Punkt auf einen vordefinierten Wert;
    - Durchführen der skalaren Multiplikationsoperation, wobei die mit mindestens einem kritischen Punkt assoziierten Koordinaten bei jeder Iteration durch Projektionsäquivalenz durch Multiplizieren von mindestens einer der Koordinaten dieses Punkts mit einer Leistung des Elements c modifiziert werden,

    wobei das Element $c$ in der Größenordnung $\delta$ strikt mehr als dreimal die Anzahl von Iterationen der skalaren Multiplikation gewählt wird.

11. Elektronische Schaltung nach Anspruch 10, die einen internen Speicher umfasst, in dem das Element c gespeichert ist.

12. Elektronische Schaltung nach Anspruch 11, bei der die Rechenverfahren entsprechend den für die Aktualisierung der Koordinaten des mindestens einen kritischen Punktes benötigten Additionsketten vorberechnet und in dem Speicher innerhalb der Komponente gespeichert werden.

13. Kryptografiesystem mit öffentlichem Schlüssel auf einer elliptischen Kurve $E$, definiert auf einem Körper $\mathbb{K}$, umfassend eine elektronische Schaltung nach einem der Ansprüche 10 bis 12 und einen Speicher außerhalb der Schaltung, in dem das Element c gespeichert ist.

14. Elektronisches System nach Anspruch 13, bei dem die Rechenverfahren entsprechend den für die Aktualisierung der Koordinaten des mindestens einen kritischen Punktes benötigten Additionsketten vorberechnet und in dem externen Speicher gespeichert werden.

15. Computerprogramm, das Befehle zum Ausführen des Verfahrens nach einem der Ansprüche 1 bis 9 umfasst, wenn das Programm von einem Datenverarbeitungsmodul ausgeführt wird.

**Claims**

1. A countermeasure method for an electronic component implementing a public-key cryptography algorithm on an elliptic curve $E$ defined over a field $\mathbb{K}$, the method comprising an iterative scalar multiplication operation in order to obtain a point $[k]P$ on the basis of a point $P$ of the curve $E$ and of an integer $k$ that must remain secret, the electrical consumption of the electronic component depending on the value taken by at least one so-called critical point used during said operation to iteratively determine the point $[k]P$, the method comprising:

   - a step (500) of providing at least one power of an element $c$ of $\mathbb{K}$ predefined non-zero constant and different from one;
   - a step (501) of initializing the coordinates of the at least one critical point to a predefined value;
   - a step implementing the scalar multiplication operation (502), the coordinates associated with at least one critical point being modified at each iteration by multiplying at least one of the coordinates of this point by the at least one power of the element $c$ obtained in the providing step (500).

   the element $c$ is chosen to be of order $\delta$ strictly greater than three times the number of iterations of the scalar multiplication.

2. The method as claimed in claim 1, in which the element $c$ is chosen to be less than or equal to half the cardinality of the base group of the curve.

3. The method as claimed in one of the preceding claims, in which the following multiplications $c$, $c^2$, $c^3$, $c^4$ and $c^6$ by the powers of $c$ are determined by using addition chains, c being chosen so as to minimize the length of said addition chains.

4. The method as claimed in one of the preceding claims, in which the coordinates associated with at least one critical point are modified by the implementation of an isomorphism $\varphi$ between the curve $E$ and a second elliptic curve $E'$.

5. The method as claimed in one of claims 1 or 2, in which the scalar multiplication operation is implemented by a left-to-right window scalar multiplication, the window being of size $w$.

6. The method as claimed in one of claims 1 or 2, in which the scalar multiplication operation is implemented by a Montgomery ladder.

7. The method as claimed in claim 1 or 2, in which the scalar multiplication operation is implemented by a scalar multiplication with right-to-left sliding window over wNAF.

8. The method as claimed in claims 1 and 2, in which the scalar multiplication operation is implemented with the following steps:

   - initialization to zero (601) of the coordinates of a point $Q$ used as working variable and corresponding to a partial scalar multiplication;
   - pre-computation (602) of $2^w$ multiples $R[j]$ of $P$ with $j = 1 \ldots 2^w$, $R$ representing said critical point;
   - doubling of $Q$ and addition of $R[v]$ to $Q$ with sliding window (603), the countermeasure being implemented by modifying at each iteration $i$ the coordinates $(X_{R[v]}, Y_{R[v]}, Z_{R[v]})$ of the point $R[v]$ with $v = (k_i, \ldots, k_{i-w+1})_2$ using the following expression: $(X_{R[v]}, Y_{R[v]}, Z_{R[v]}) = (c^2 X_{R[v]}, c^3 Y_{R[v]}, c Z_{R[v]})$.

9. The method as claimed in claim 3, in which the scalar multiplication operation is implemented with the following steps:

   - initialization to zero (601) of the coordinates of a point $Q$ used as working variable and corresponding to a partial scalar multiplication;
   - pre-computation (602) of $2^w$ multiples $R[j]$ of $P$ with $j = 1 \ldots 2^w$, $R$ representing said critical point;
   - doubling of $Q$ and addition of $R[v]$ to $Q$ with sliding window (603), the countermeasure being implemented by modifying the coordinates $(X_Q, Y_Q)$ and $(X_{R[j]}, Y_{R[j]})$ of the points $R[j]$ and $Q$ at each iteration in the following manner:

i. $(X_Q, Y_Q) = (c^2 X_Q, c^3 Y_Q)$
ii. for j ranging from 1 to $2^w$, $(X_{R[j]}, Y_{R[j]}) = (u^2 X_{R[j]}, u^3 Y_{R[j]})$.

10. An electronic circuit for public-key cryptography on an elliptic curve $E$ defined over a field $\mathbb{K}$, implementing a scalar multiplication operation making it possible to obtain a point $[k]P$ on the basis of a point $P$ of the curve $E$ and of an integer $k$ that must remain secret, the electrical consumption of said component being dependent on the value taken by at least one so-called critical point used during said operation to iteratively determine the point $[k]P$, the circuit comprising at least one module adapted so as to:

- provide a predefined non-zero constant element $c$ of $\mathbb{K}$ different from one;
- initialize coordinates of the at least one critical point to a predefined value;
- implement the scalar multiplication operation, the coordinates associated with at least one critical point being modified at each iteration by projection equivalence by multiplying at least one of the coordinates of this point by a power of the element $c$.

the element $c$ is chosen to be of order $\delta$ strictly greater than three times the number of iterations of the scalar multiplication.

11. The electronic circuit as claimed in claim 10, comprising an internal memory in which the element $c$ is stored.

12. The electronic circuit as claimed in claim 11, in which computation procedures corresponding to the addition chains required for updating the coordinates of the at least one critical point are pre-computed and stored in the memory internal to the component.

13. A system for public-key cryptography on an elliptic curve $E$ defined over a field $\mathbb{K}$ comprising an electronic circuit as claimed in one of claims 10 to 12 and a memory external to said circuit and in which the element c is stored.

14. The electronic system as claimed in claim 13, in which computation procedures corresponding to the addition chains required for updating the coordinates of the at least one critical point are pre-computed and stored in the external memory.

15. A computer program comprising instructions for the execution of the method as claimed in one of claims 1 to 9, when the program is executed by a data processing module.

ACQUISITION

$k = (k_{n-1}, ..., k_0)_2, P, w$

$\overset{\curvearrowright}{\phantom{x}}$ 100

INITIALISATION

$Q \leftarrow O$

$\overset{\curvearrowright}{\phantom{x}}$ 101

PRE-CALCUL

for $0 \leq j < 2^w$ do

$R[j] \leftarrow [j]P$

$i \leftarrow n - 1$

$\overset{\curvearrowright}{\phantom{x}}$ 102

DOUBLEMENT ET ADDITION

for $i = n - 1$ downto 0 by $w$ do

$Q \leftarrow 2^w Q$

$v \leftarrow (k_i, ..., k_{i-w+1})_2$

$Q \leftarrow Q + R[v]$

$\overset{\curvearrowright}{\phantom{x}}$ 103

[k]P = Q

$\overset{\curvearrowright}{\phantom{x}}$ 104

FIG.1

ACQUISITION

$$k = (k_{n-1}, \dots, k_0)_2, P, w$$

— 200

INITIALISATION

$$Q[0] \leftarrow O \, Q[1] \leftarrow P$$

— 201

ECHELLE

for $i = n - 1$ downto 0 do

$$Q[1 - k_i] \leftarrow Q[0] + Q[1]$$

$$Q[k_i] \leftarrow 2Q[k_i]$$

— 202

[k]P = Q [0]

— 203

FIG.2

ACQUISITION

$$k = (\, k_{l-1}, \dots, k_0)_{w-NAF}, P$$

300

INITIALISATION N°1

$$m \leftarrow 2^{w-1} - 1$$

$$R \leftarrow P$$

301

INITIALISATION N°2

for $j = 1$ to $m$ by 2 do

$$Q[j] \leftarrow O$$

302

ADDITIONS ET SOUSTRACTIONS DE PUISSANCES DE P

for $i = 0$ to $l - 1$ do

    if $k_i \neq 0$ then

        if $k_i < 0$ then $t \leftarrow -1$

        else $t \leftarrow 1$

        $Q[abs(k_i)] \leftarrow Q[abs(k_i)] + tR$

    $R \leftarrow 2R$

303

POST-CALCUL

for $j = 3$ to $m$ by 2 do

$$Q[1] \leftarrow Q[1] + jQ[j]$$

304

[k]P = Q [1]

305

FIG.3

FIG.4

```
┌─────────────────────────┐
│       ACQUISITION       │      500
│    NOMBRE PREDEFINI     │
└─────────────────────────┘
            │
            ▼
┌─────────────────────────┐
│    INITIALISATION DES   │      501
│     COORDONNEES DU      │
│      POINT CRITIQUE     │
└─────────────────────────┘
            │
            ▼
┌─────────────────────────┐
│      MULTIPLICATION     │
│        SCALAIRE         │      502
│    AVEC MISE A JOUR     │
│     DES COORDONNEES     │
│     DU POINT CRITIQUE   │
└─────────────────────────┘
```

FIG.5

| ACQUISITION |
|---|
| $k = (k_{n-1}, \ldots, k_0)_2, P, w, c$ |

600

| INITIALISATION |
|---|
| $Q \leftarrow 0$ |

601

| PRE-CALCUL |
|---|
| for $0 \le j < 2^w$ do |
| $R[j] \leftarrow [j]P$ |

602

| DOUBLEMENT ET ADDITION AVEC CONTREMESURE |
|---|
| for $i = n - 1$ downto 0 by $w$ do |
| $\quad Q \leftarrow 2^w Q$ |
| $\quad v \leftarrow (k_i, \ldots, k_{i-w+1})_2$ |
| $\quad Q \leftarrow Q + R[v]$ |
| $\quad (X_{R[v]}, Y_{R[v]}, Z_{R[v]}) \leftarrow (c^2 X_{R[v]}, c^3 Y_{R[v]}, c Z_{R[v]})$ |

603

[k]P = Q [1]

604

FIG.6

| ACQUISITION | 700 |
|---|---|
| $k = (k_{n-1}, \dots, k_0)_2, P, w, c$ | |

| INITIALISATION | 701 |
|---|---|
| $Q \leftarrow O$ | |

| PRE-CALCUL | 702 |
|---|---|
| for $0 \leq j < 2^w$ do $R[j] \leftarrow [j]P$ | |

**DOUBLEMENT ET ADDITION AVEC CONTREMESURE** — 703

for $i = n - 1$ downto $0$ by $w$ do

$\quad Q \leftarrow 2^w Q$

$\quad v \leftarrow (k_i, \dots, k_{i-w+1})_2$

$\quad Q \leftarrow Q + R[v]$

$\quad (X_Q, Y_Q) \leftarrow (c^2 X_Q, c^3 Y_Q)$

$\quad$ for $0 \leq j < 2^w$ do

$\quad\quad (X_{R[j]}, Y_{R[j]}) \leftarrow (c^2 X_{R[j]}, c^3 Y_{R[j]})$

$\quad a \leftarrow c^4 a$

$\quad b \leftarrow c^6 b$

$(X_Q, Y_Q) \leftarrow (c^{-2n/w} X_Q, c^{-3n/w} Y_Q)$

[k]P = Q — 704

**FIG.7**

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1166494 B1

- EP 1381936 B1

**Littérature non-brevet citée dans la description**

- **C. MURDICA ; S. GUILLEY ; J.-L. DANGER ; P. HOOGVORST ; D. NACCACHE.** Same Values Power Analysis Using Special Points on Elliptic Curves, Workshop on Cryptographic. *Hardware and Embedded Systems,* 2001
- **C. D. WALTER.** Sliding Windows Succumbs to Big MacAttack. *Workshop on Constructive Side-Channel Analysis and Secure Design,* 2012

- **CHEVALLIER-MAMES, B. ; CIET, M. ; JOYE, M.** Low-Cost Solutions for Preventing Simple Side-Channel Analysis: Side-Channel Atomicity. *IEEE Transactions on Computers,* 2004, 760-768
- **T. MARKETTOS ; S. W. MOORE.** The Frequency Injection Attack on Ring-Oscillator-Based True Random Number Generators. *CHES,* 2009, 317-331